Europäisches Patentamt

European Patent Office

Office européen des brevets

(11) Numéro de publication: **0 459 344 A1**

## (12) DEMANDE DE BREVET EUROPEEN

(21) Numéro de dépôt: **91108566.0**

(22) Date de dépôt: **27.05.91**

(51) Int. Cl.⁵: **H04Q 7/04**

(30) Priorité: **30.05.90 FR 9006710**

(43) Date de publication de la demande:
**04.12.91 Bulletin 91/49**

(84) Etats contractants désignés:
**AT BE CH DE DK ES FR GB IT LI NL SE**

(71) Demandeur: **ALCATEL CIT**
**12 Rue de la Baume**
**F-75008 Paris(FR)**

(72) Inventeur: **Ballard, Michel**
**64, avenue Marguerite Renaudin**
**F-92140 Clamart(FR)**
Inventeur: **Issenmann, Edouard**
**13, rue Welvert**
**F-78150 Le Chesnay(FR)**

(74) Mandataire: **Weinmiller, Jürgen et al**
**Lennéstrasse 9 Postfach 24**
**W-8133 Feldafing(DE)**

(54) **Dispositif de téléchargement de logiciel pour un terminal de télécommunication.**

(57) L'invention concerne un dispositif pour télécharger un terminal de télécommunication, par exemple un radiotéléphone (9), afin de changer son logiciel de fonctionnement, sans que l'usager de ce radiotéléphone doive l'apporter à une agence commerciale de l'opérateur du réseau de radiotéléphonie. Dans un exemple de réalisation, chaque radiotéléphone comporte :
- une pluralité de mémoires vives (1, 2) pour stocker différents logiciels de fonctionnement;
- une mémoire morte (3) stockant un logiciel de téléchargement;
- un microprocesseur (4) exécutant soit le logiciel de téléchargement, soit l'un des programmes de fonctionnement;
- une interface radio classique (5), utilisée, d'une part, comme interface de téléchargement, et d'autre part, pour les liaisons radiotéléphoniques classiques.

Application à tous les terminaux de télécommunication, comportant un microprocesseur, notamment les terminaux répandus en très grand nombre dans le public.

FIG.1

L'invention concerne un dispositif de téléchargement de logiciel pour un terminal de télécommunication, tel qu'un radiotéléphone mobile pour réseau cellulaire, ou un téléphone sans fil, ou un terminal fixe de réseau numérique à intégration de services. Ces terminaux ont des caractéristiques communes :
- ils exécutent un logiciel, car ils comportent un microprocesseur réalisant l'essentiel des opérations constituant leur fonctionnement;
- ils sont diffusés en très grand nombre dans le grand public.

Le logiciel exécuté par chacun des terminaux doit pouvoir évoluer au cours du temps, pour : corriger des anamolies de ce logiciel; ou améliorer le fonctionnement du terminal; ou offrir de nouveaux services aux abonnés; ou suivre l'évolution des spécifications techniques des réseaux de télécommunication; ou s'adapter à différents réseaux nécessitant l'exécution de logiciels différents, par exemple si un terminal est déplacé d'un pays à un autre.

Changer le logiciel exécuté par un terminal présente des difficultés importantes. Le logiciel est classiquement stocké dans une mémoire morte. Changer un logiciel nécessite de rapporter les terminaux à une agence commerciale et de remplacer des composants dans ces terminaux. Chaque terminal est donc indisponible à l'usager pendant un certain temps. Ces opérations sont donc coûteuses pour l'opérateur du réseau.

L'article "Portable Telecommunication" dans "Proceedings of the national communications forum" vol 42 n° 2, 30 septembre 1988, page 1708, mentionne que des protocoles de réseau, des services et des possibilités d'accès peuvent être téléchargés dans un terminal portable de télécommunication. Cependant cette solution n'est pas bien adaptée au cas d'un terminal mobile qui franchit fréquemment une frontière entre deux territoires sur lesquels les protocoles de communications sont différents. En effet, il faut un certain délai pour chaque téléchargement de logiciel de fonctionnement.

Le délai de téléchargement peut être gênant pour l'abonné.

Un premier but de l'invention est de proposer un dispositif qui permettent non seulement de télécharger le logiciel de fonctionnement d'un terminal mais qui permette en outre des changements fréquents d'un logiciel de fonctionnement à un autre sans délais gênant par l'usager.

Selon l'invention, un dispositif de téléchargement de logiciel pour un terminal de télécommunication raccordé à un réseau de télécommunication par une interface classique appelée interface de raccordement au réseau, ledit terminal comportant un microprocesseur commandant le fonctionnement dudit terminal en exécutant un logiciel dit de fonctionnement, est caractérisé en ce qu'il comporte en outre :
- une pluralité de mémoires vive pour mémoriser plusieurs logiciels de fonctionnement;
- au moins une interface de téléchargement pour recevoir, et inscrire dans une mémoire vive, un logiciel de fonctionnement;
- une mémoire morte stockant un logiciel de téléchargement.
- des moyens pour sélectionner l'une de ces mémoires vives en écriture, pour télécharger un logiciel différent dans chacune de ces mémoires vives; et pour sélectionner l'un de ces mémoires vives en lecture, pour exécuter l'un de ces logiciels dans le microprocesseur.

Le dispositif ainsi caractérisé permet de changer le logiciel de fonctionnement sans avoir à le télécharger à chaque fois. Il simplifie donc l'adaptation d'un radiotéléphone ou d'un téléphone sans fil, à un changement de réseau. L'adaptation consiste seulement à sélectionner l'une des mémoires, si le logiciel correspondant à la zone où est situé le terminal, a déjà été téléchargé antérieurement.

Que le terminal comporte une seule mémoire ou plusieurs mémoires vives pour stocker un ou plusieurs logiciels de fonctionnement, il est nécessaire de relier ce terminal à un centre fournissant les logiciels à télécharger. Un moyen connu consiste à utiliser l'interface classique de raccordement du terminal au réseau de télécommunication, le logiciel à télécharger étant acheminé par ledit réseau via l'interface classique. Le dispositif ainsi caractérisé a pour avantage d'être particulièrement simple puisqu'il ne nécessite pas de rajouter une interface supplémentaire. Mais il a pour inconvénient de soumettre le téléchargement aux limitations du canal de transmission habituelle du terminal. Par exemple, le débit du téléchargement d'un radio-téléphone est limité par le débit de son canal vocal ou de son canal de signalisation.

Un second but de l'invention est de proposer un dispositif de téléchargement qui n'ai pas cet inconvénient. Un second objet de l'invention est un dispositif de téléchargement pour un radiotéléphone, ledit radiotéléphone comportant :
- un microprocesseur commandant le fonctionnement dudit radiotéléphone en exécutant un logiciel dit de fonctionnement;
- au moins une mémoire vive pour mémoriser au moins un logiciel de fonctionnement;
- au moins une interface de téléchargement pour recevoir, et inscrire dans une mémoire vive, un logiciel de fonctionnement;
- une mémoire morte stockant un logiciel de téléchargement;
caractérisé en ce que l'interface de téléchargement est une interface spécifique pour le téléchargement constituée d'une interface permettant de raccorder ledit radiotéléphone à un accès normalisé d'un réseau numérique à intégration de service, le logiciel à télécharger étant acheminé par ledit réseau, jusqu'à cet accès normalisé.

Le dispositif ainsi caractérisé présente l'avantage de permettre le téléchargement d'un radiotéléphone tout à fait indépendamment du réseau de radiotéléphonie auquel le terminal est relié habituellement, ce qui permet d'éviter toute contrainte imposée par ce dernier, telle qu'une limitation du débit des informations transmises pour le téléchargement, ou telle que l'occupation d'un canal de transmission, pendant toute la durée nécessaire au téléchargement du logiciel.

L'invention sera mieux comprise et d'autres détails apparaîtront à l'aide de la description ci-dessous, et des figures l'accompagnant :
- les figures 1 à 3 représentent respectivement les schémas synoptiques de trois exemples de radiotéléphone comportant respectivement trois exemples de réalisation du dispositif selon l'invention;
- les figures 4 et 5 représentent respectivement les schémas synoptiques de deux exemples de terminaux fixes de réseau numérique à intégration de services, comportant respectivement deux exemples de réalisation du dispositif selon l'invention.

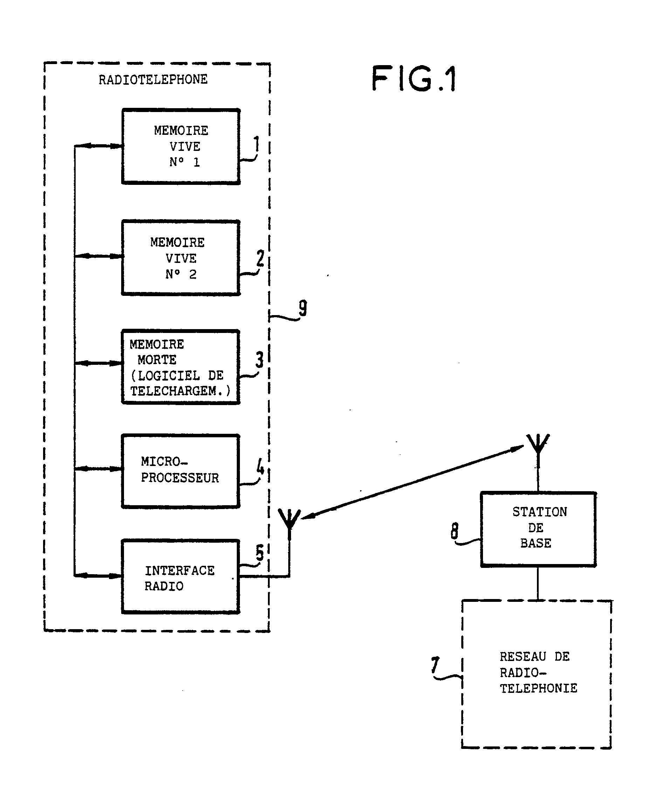

Le radiotéléphone 9 représenté sur la figure 1 comporte : une première mémoire vive 1; une seconde mémoire vive 2; une mémoire morte 3 stockant un logiciel de téléchargement; un microprocesseur 4; et une interface radio 5. Tous ces moyens sont reliés entre eux par un bus. Le radiotéléphone 9 est en relation radio avec une station de base, 8, reliée à un réseau de radiotéléphonie 7. L'interface radio 5 est une interface classique permettant au radiotéléphone de communiquer avec la station de base 8, mais elle est en outre utilisée pour télécharger un logiciel de fonctionnement, dans l'une des deux mémoires vives, 1 et 2. Les opérations de téléchargement sont réalisées par le microprocesseur 4 en exécutant le logiciel de téléchargment stocké dans la mémoire morte 3.

La présence de deux mémoires vives, 1 et 2, permet de stocker deux logiciels différents correspondant par exemple au logiciel en cours de validité et à un autre logiciel qui remplacera le précédent à une date prédéterminée. Ou bien, ces deux logiciels correspondent à deux types de réseau différents, exploités dans des pays différents. Naturellement, cet exemple n'est pas limitatif et il est possible de prévoir un plus grand nombre de mémoires vives, si la diversité des réseaux conduit à utiliser plus de deux logiciels différents.

Le radiotéléphone 9 comportant une pluralité de mémoires vives, 1 et 2, il est prévu des moyens pour sélectionner l'une de ces mémoires vives en écriture, en vue de télécharger un logiciel différent dans chacune de ces mémoires vives; et des moyens pour sélectionner l'une de ces mémoires vives en lecture, pour éxecuter seulement l'un de ces logiciels.

Les moyens pour sélectionner l'une des deux mémoires vives, en écriture, sont constitués essentiellement par le microprocesseur 4, commandé par : le logiciel de téléchargement contenu dans la mémoire morte 3, ou par un module prévu dans chaque logiciel de fonctionnement.

Lorsqu' aucun logiciel de fonctionnement n'est présent dans les mémoires vives, la sélection en écriture est commandée par le microprocesseur 4 en fonction des instructions du logiciel de téléchargement. Le logiciel de téléchargement fournit en outre des instructions pour permettre au radiotéléphone d'établir une liaison radio, puis télécharger un logiciel par cette liaison.

L'exécution du logiciel de téléchargement est lancée : soit par un message fourni par le réseau 7, soit par un ordre de l'usager, au moyen d'un clavier incorporé au radiotéléphone 9 et non représenté.

La sélection du logiciel à exécuter pour le fonctionnement habituel, c'est-à-dire la sélection de l'une des deux mémoires vives en lecture est commandée soit par un message envoyé par le réseau 7, soit par un ordre donné par l'usager.

Chaque logiciel de fonctionnement comporte un module pour prendre en compte : un message du réseau 7; ou un ordre de l'usager; et l'identité des logiciels éventuellement stockés dans les deux mémoires vives, 2 et 3; et pour en déduire quelle mémoire vive doit être sélectionnée, en écriture ou en lecture.

L'interface radio définie par le Groupe Spécial Mobile de la Conférence Européenne des Télécommunications, prévoie des canaux de transmission de données entre le réseau et les radiotéléphone mobiles, pour une transmission de point à point ou une diffusion générale. Ces canaux autorisent un débit pouvant atteindre 9,6 kbits par seconde.

La diffusion générale est utilisable pour mettre à jour simultanément les logiciels des radiotéléphones de tout un parc. Au contraire, la transmission de point à point est utilisable pour télécharger un radiotéléphone particulier qui entre dans une zone géographique desservie par un réseau nécessitant l'exécution d'un logiciel de fonctionnement, qui n'est pas déjà stocké dans l'une des mémoires vives du radiotéléphone.

Le téléchargement est lancé à l'initiative du réseau, après analyse d'un paramètre appelé "Classmark Update" contenu dans un message appelé "Loc Upd Request" envoyé par le radiotéléphone mobile pour initialiser une procédure dite de localisation, lorsqu'il entre dans la nouvelle zone. Ce paramètre indique la version du radiotéléphone. Il indique si ce radiotéléphone est téléchargeable et quel type de téléchargement il est susceptible d'accepter : partiel, pour certaines fonctions; ou total, pour toutes les fonctions sauf la localisation et le téléchargement. Le réseau 7 lance le téléchargement en envoyant au radiotéléphone 9, par radio, un message qui est interprêté par le microprocesseur 4 en exécutant un module adéquat du logiciel de fonctionnement, qui est en cours d'exécution à l'instant considéré. Une fois l'opération de téléchargement terminée, la procédure de localisation est terminée. Le radiotéléphone dispose alors de toutes les informations nécessaires pour fonctionner dans la nouvelle zone.

La réalisation du logiciel de téléchargement est à la portée de l'Homme de l'Art. La partie assurant le chargement des mémoires vives est analogue au logiciel d'amorçage (bootstrap en anglais) utilisé pour charger un logiciel d'une disquette vers la mémoire centrale d'un ordinateur. La partie assurant l'établissement d'une liaison radio est une version simplifiée d'un logiciel classique commandant le fonctionnement d'un radiotéléphone.

Cette première variante du dispositif selon l'invention a pour avantage d'être simple et peu coûteuse, puisqu'il suffit de munir le radiotéléphone d'au moins une mémoire vive, et d'une mémoire morte contenant un logiciel de téléchargement, sans interface supplémentaire par rapport à un radiotéléphone classique. Les téléchargements de plusieurs terminaux peuvent être réalisés simultanément, ce qui permet une mise à niveau d'une partie ou de l'ensemble des terminaux d'un réseau de radiotéléphonie, en une seule opération. La diffusion de corrections d'un logiciel, ou le remplacement complet d'un logiciel est donc facile.

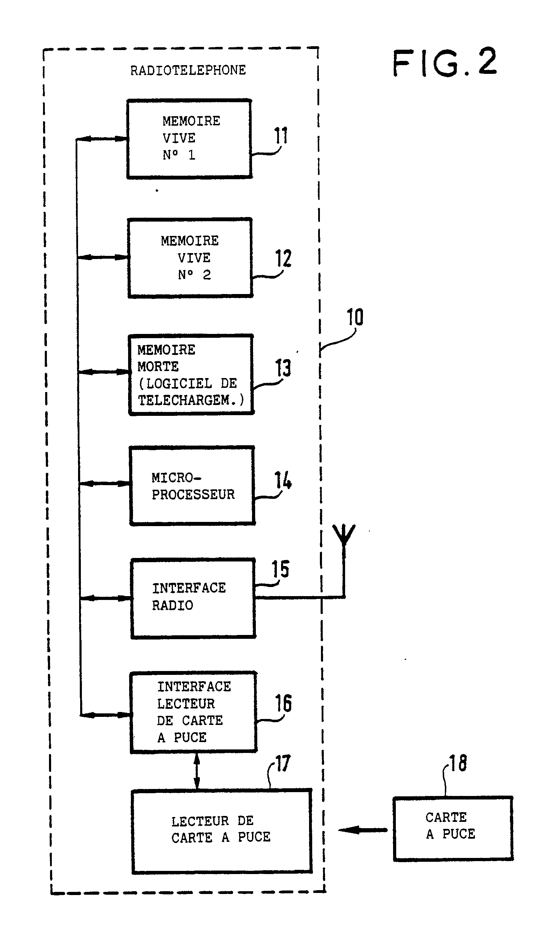

La figure 2 représente le schéma synoptique d'un radiotéléphone 10 comportant un second exemple de réalisation du dispositif selon l'invention. Le radiotéléphone 10 comporte : deux mémoires vives 11 et 12; une mémoire morte 13 contenant le logiciel de téléchargement; un microprocesseur 14; une interface radio classique 15; une interface de lecteur de carte à puce, 16; et un lecteur de carte à puce, 17. Les moyens 11 à 16 sont reliés entre eux par un bus.

L'interface de téléchargement est une interface spécifique, indépendante de l'interface radio 15, et constituée de l'interface de lecteur de carte à puce, 16. Cette variante de réalisation permet de télécharger un logiciel indépendamment du réseau de radiotéléphonie, ce qui présente l'avantage d'éviter les contraintes de celui-ci. D'autre part un logiciel de téléchargement par carte est plus simple qu'un logiciel de téléchargement par relation radio, celle-ci nécessitant une procédure complexe pour son établissement. Le téléchargement est commandé par l'usager au moyen d'un clavier incorporé au radiotéléphone 10, après que l'usager ait introduit une carte à puce 18 dans le lecteur de carte à puce 17. La sélection de l'une des deux mémoires vives, 11 ou 12, en écriture est commandée par l'usager au moyen de son clavier. La sélection de l'une des deux mémoires vives en lecture est commandée soit par l'usager, soit par un module du logiciel de fonctionnement, en cours d'éxécution, de la façon décrite précédemment pour le radiotéléphone 9, par exemple lors d'un changement de zone géographique.

Il est possible de réaliser un logiciel de téléchargement permettant un téléchargement alternativement par l'interface radio 15, comme décrit pour le radiotéléphone 9, ou par le lecteur de carte 17, comme décrit ci-dessus pour le radiotéléphone 10.

La carte à puce 18 est distribuée aux usagers par l'opérateur du réseau, soit directement par courrier, soit par l'intermédiaire d'un circuit de distribution telles que des agences commerciales, ou des commerces classiques. Il est à remarquer que le lecteur de carte à puce peut être remplacé par un lecteur de carte magnétique.

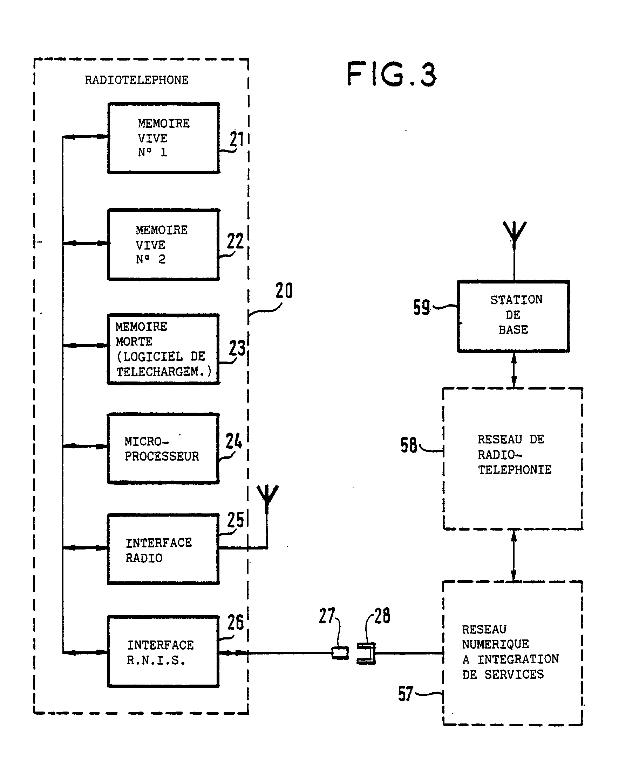

La figure 3 représente le schéma synoptique d'un radiotéléphone 20 comportant un troisième exemple de réalisation du dispositif selon l'invention. Il comporte : deux mémoires vives, 21 et 22; une mémoire 23 stockant un logiciel de téléchargement; un microprocesseur 24; une interface radio classique 25; et une interface 26 de raccordement à un accès normalisé d'un réseau numérique à intégration de services, 57. Le radiotéléphone 20 établit une liaison radiotéléphonique avec une station de base 59, reliée à un réseau de radiotéléphonie 58. Ce dernier est relié au réseau numérique à intégration de services, 57. Les moyens 21 à 26 sont reliés entre eux par un bus. L'interface radio 25 peut établir une relation radio avec la station de base 59 pour la transmission de signaux téléphoniques, par.contre le téléchargement de logiciel est effectué au moyen d'un câble reliant temporairement l'interface 26 à un accès normalisé du réseau 57. Ce câble est muni d'un connecteur mâle normalisé 27 pouvant inséré dans un connecteur femelle normalisé 28 relié au réseau 57.

Quand l'usager décide de télécharger un logiciel dans son radiotéléphone 20, il sélectionne en écriture l'une des deux mémoires vives, 21 ou 22, au moyen d'un clavier, après avoir connecté le câble reliant l'interface 26 au réseau 57. La sélection en lecture de l'une des deux mémoires vives, 21 ou 22, est réalisée de manière analogue à celle décrite pour le radio téléphone 9.

Cette variante a pour avantage d'utiliser un moyen de transmission du logiciel qui est plus facilement disponible qu'une carte à puce, dans la mesure où le nombre d'accès au réseau 57 est très élevé.

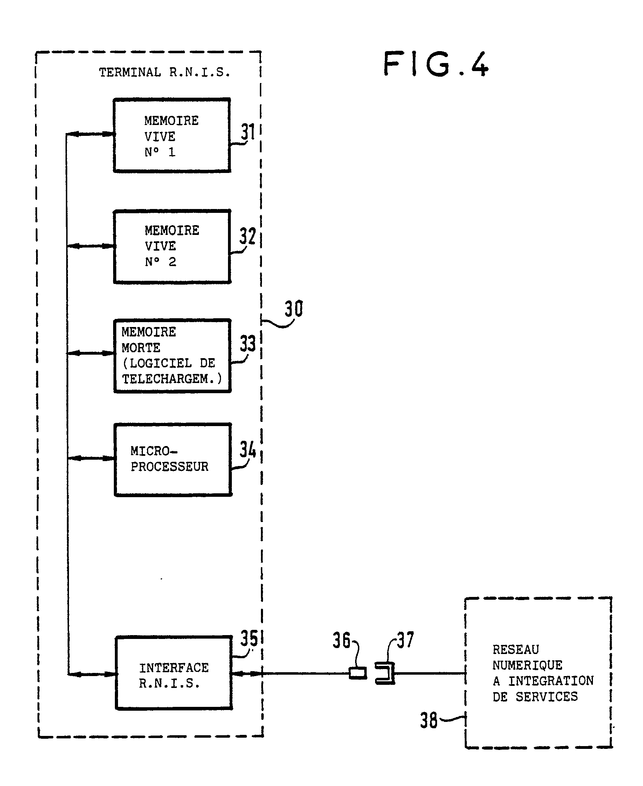

La figure 4 représente le schéma synoptique d'un terminal fixe 30 pour réseau numérique à intégration de services, ce terminal 30 comportant un quatrième exemple de réalisation du dispositif selon l'invention. Le terminal 30 comporte deux mémoires vives, 31 et 32, pour stocker respectivement deux logiciels de fonctionnement, différents, inscrits par téléchargement; une mémoire morte 33 stockant en permanence un logiciel de téléchargement; un microprocesseur 34; et une interface 35, de raccordement à un réseau numérique à intégration de services, constituant aussi une interface de téléchargement des logiciels de fonctionnement.

L'interface 35 est reliée en permanence à un accès normalisé d'un réseau numérique à intégration de services, 38, par un câble muni d'un connecteur mâle normalisé 36 enfiché dans un connecteur femelle normalisé 37 raccordé au réseau 38. Cette variante de réalisation, a pour avantage que les logiciels de fonctionnement sont téléchargés par l'intermédiaire d'un interface classique 35, ce qui évite de rajouter une interface spécifique.

Chaque accès normalisé 37 comporte un canal dit de signalisation d'usager à usager, et plusieurs canaux pour la transmissionn proprement dite, acheminant des signaux vocaux, par exemple. Le téléchargement d'un logiciel peut être réalisé par l'intermédiaire de l'un de ces deux types de canaux, ou bien en combinant les deux; les canaux de transmission étant utilisés pour transmettre le logiciel à télécharger, et le canal de signalisation étant utilisé pour initialiser et pour conclure le téléchargement.

Le téléchargement de l'une des mémoires vives, 31 ou 32, est lancé par l'usager, au moyen d'un clavier, ou par le logiciel de fonctionnement en cours d'éxécution, lorsqu'il reçoit un ordre de téléchargement envoyé par le réseau 38. Chaque logiciel de fonctionnement comporte un module pour prendre en compte : un ordre de l'usager, ou un ordre du réseau 38. La sélection de l'une des deux mémoires vives en écriture ou en lecture est commandée par la microprocesseur 4, en fonction des instructions du logiciel de téléchargement et en fonction des ordres donnés par l'usager ou par le réseau.

Le téléchargement d'un nouveau logiciel de fonctionnement et le basculement d'un logiciel ancien au logiciel nouveau peuvent être entièrement télécommandés par l'opérateur du réseau 38, sans intervention de l'usager.

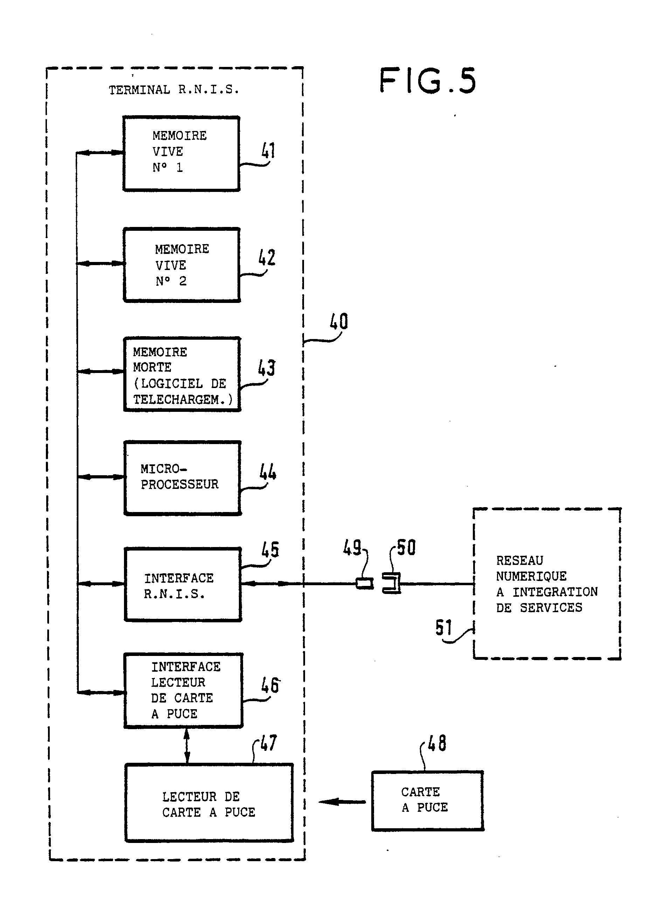

La figure 5 représente le schéma synoptique d'un autre exemple de terminal fixe, 40, pour réseau numérique à intégration de services, 51, ce terminal comportant un dispositif de téléchargement selon la seconde variante. Ce terminal 40 comporte : deux mémoires vives, 41 et 42, pour stocker respectivement deux logiciels de fonctionnement, différents, qui sont téléchargés; une mémoire morte 43 stockant en permanence un logiciel de téléchargement; un microprocesseur 44; une interface 45 de raccordement à un réseau numérique à intégration de services; une interface 46 pour lecteur de carte à puce; et un lecteur de carte à puce 47. Les moyens 41 à 46 sont reliés entre eux par un bus.

L'interface 45 est une interface classique reliée en permanence à un réseau numérique à intégration de services, 51, au moyen d'un câble muni d'un connecteur mâle normalisé, 49, enfiché dans un connecteur femelle normalisé, 50, relié au réseau 51. Le lecteur 47 de carte à puce est relié à une entrée de l'interface 46. Pour télécharger un logiciel de fonctionnement, l'usager sélectionne l'une des deux mémoires vives, 41 ou 42, au moyen d'un clavier non représenté, puis introduit une carte à puce 48 dans le lecteur 47. La sélection de l'une des deux mémoires vives en lecture est réalisée de manière analogue à celle décrite précédemment, pour le terminal 30.

Il est possible de prévoir un logiciel de téléchargement permettant de télécharger alternativement par le réseau 51 ou par une carte 48, en fonction des circonstances. Le lecteur 47 peut être remplacé par un lecteur de carte magnétique.

La portée de l'invention n'est pas limitée aux exemples décrits ci-dessus. Elle est applicable à tout autre terminal de télécommunication comportant un microprocesseur, si la complexité de son logiciel et son évolution dans le temps justifient de changer occasionnellement ce logiciel.

## Revendications

1. Dispositif de téléchargement de logiciel pour un terminal de télécommunication (9) raccordé à un réseau de télécommunication (7) par une interface classique (5) appelée interface de raccordement au réseau, ledit terminal comportant un microprocesseur (4 ) commandant le fonctionnement dudit terminal (9) en exécutant un logiciel dit de fonctionnement; caractérisé en ce qu'il comporte en outre :
   - une pluralité de mémoires vive (1, 2) pour mémoriser plusieurs logiciels de fonctionnement;
   - au moins une interface de téléchargement (5) pour recevoir, et inscrire dans une mémoire vive (1, 2), un logiciel de fonctionnement;

- une mémoire morte (3) stockant un logiciel de téléchargement.
- des moyens (4) pour sélectionner l'une de ces mémoires vives en écriture, pour télécharger un logiciel différent dans chacune de ces mémoires vives; et pour sélectionner l'une de ces mémoires vives en lecture, pour exécuter l'un de ces logiciels dans le microprocesseur (4).

2. Dispositif selon la revendication 1, caractérisé en ce que les moyens pour sélectionner (4) sont commandés par un message du réseau, acheminé par l'interface (5) de raccordement au réseau de télécommunication (7).

3. Dispositif selon la revendication 2, caractérisé en ce que les moyens pour sélectionner (4) sont commandés au moyen d'un clavier manipulé par l'usager du terminal (9).

4. Dispositif pour télécharger un logiciel dans un radiotéléphone (20), caractérisé en ce qu'il comporte une interface spécifique pour le téléchargement constituée d'une interface (26) permettant de raccorder ledit radiotéléphone (20) à un accès normalisé (28) d'un réseau numérique à intégration de service (57), le logiciel à télécharger étant acheminé par ledit réseau, jusqu'à cet accès normalisé (28).

# FIG.1

RADIOTELEPHONE

MEMOIRE VIVE N° 1 — 1

MEMOIRE VIVE N° 2 — 2

9

MEMOIRE MORTE (LOGICIEL DE TELECHARGEM.) — 3

MICRO-PROCESSEUR — 4

INTERFACE RADIO — 5

STATION DE BASE — 8

RESEAU DE RADIO-TELEPHONIE — 7

# FIG.2

RADIOTELEPHONE

MEMOIRE
VIVE
N° 1    —11

MEMOIRE
VIVE
N° 2    —12

10

MEMOIRE
MORTE
(LOGICIEL DE
TELECHARGEM.)    —13

MICRO-
PROCESSEUR    —14

INTERFACE
RADIO    —15

INTERFACE
LECTEUR
DE CARTE
A PUCE    —16

LECTEUR DE
CARTE A PUCE    —17

CARTE
A PUCE    —18

# FIG.3

RADIOTELEPHONE

MEMOIRE VIVE N° 1 — 21

MEMOIRE VIVE N° 2 — 22

20

MEMOIRE MORTE (LOGICIEL DE TELECHARGEM.) — 23

MICRO-PROCESSEUR — 24

INTERFACE RADIO — 25

INTERFACE R.N.I.S. — 26

27 28

STATION DE BASE — 59

RESEAU DE RADIO-TELEPHONIE — 58

RESEAU NUMERIQUE A INTEGRATION DE SERVICES — 57

# FIG.4

TERMINAL R.N.I.S.

MEMOIRE VIVE N° 1 — 31

MEMOIRE VIVE N° 2 — 32

30

MEMOIRE MORTE (LOGICIEL DE TELECHARGEM.) — 33

MICRO-PROCESSEUR — 34

INTERFACE R.N.I.S. — 35

36  37

RESEAU NUMERIQUE A INTEGRATION DE SERVICES

38

EP 0 459 344 A1

# FIG.5

TERMINAL R.N.I.S.

MEMOIRE
VIVE
N° 1            *41*

MEMOIRE
VIVE
N° 2            *42*

MEMOIRE
MORTE
(LOGICIEL DE   *43*
TELECHARGEM.)

MICRO-
PROCESSEUR     *44*

INTERFACE       *45*
R.N.I.S.

*40*

*49*    *50*

INTERFACE
LECTEUR
DE CARTE       *46*
A PUCE

RESEAU
NUMERIQUE
A INTEGRATION
DE SERVICES

*51*

*47*                    *48*

LECTEUR DE
CARTE A PUCE

CARTE
A PUCE

11

Office européen
des brevets

RAPPORT DE RECHERCHE
EUROPEENNE

Numéro de la demande

EP 91 10 8566

## DOCUMENTS CONSIDERES COMME PERTINENTS

| Catégorie | Citation du document avec indication, en cas de besoin, des parties pertinentes | Revendication concernée | CLASSEMENT DE LA DEMANDE (int. Cl.5) |
|---|---|---|---|
| Y | PROCEEDINGS OF THE NATIONAL COMMUNICATIONS FORUM, vol. 42, no. 2, 30 septembre 1988, pages 1706-1713; P.E. JACKSON et al.: "Portable communication" * Page 1708, colonne de droite, lignes 29-34; page 1709, colonne de gauche, lignes 44-54; figure 1 * | 1 | H 04 Q 7/04 |
| A | IDEM | 2-4 | |
| Y | EP-A-0 297 616 (S.E.L.) * Résumé, colonne 3, lignes 23-32; figure 1 * | 1 | |
| A | | 2-3 | |
| A | EP-A-0 369 110 (BOSCH) * Page 2, colonne 2, lignes 17-20,42-46; colonne 3, lignes 18-25; fig. * | 1 | |
| A | US-A-4 736 409 (HASEGAWA) * Colonne 1, ligne 60 - colonne 2, ligne 2; colonne 5, lignes 29-37 * | 1 | |
| A | PHILIPS TDS REVIEW, vol. 45, no. 2, juin 1987, pages 10-26, Eindhoven, NL; J.F. BRIEND et al.: "French PTT MINITEL and LECAM programme" * Page 18, ligne 35- page 21; ligne 20 * | 1 | DOMAINES TECHNIQUES RECHERCHES (int. Cl.5)<br><br>H 04 Q<br>H 04 M |
| A | DE-A-3 815 071 (LOEWE OPTA) * Colonne 4, lignes 6-24 * | 1-4 | |

Le présent rapport de recherche a été établi pour toutes les revendications

| Lieu de la recherche | Date d'achèvement de la recherche | Examinateur |
|---|---|---|
| La Haye | 12 août 91 | DE LA FUENTE DEL AGU |